# DEMANDE DE BREVET EUROPEEN

(11) **EP 3 945 167 A1**
(43) Date de publication de la demande: **02.02.2022**
(21) Numéro de dépôt: 21187187.6
(22) Date de dépôt: 22.07.2021
(51) Int. Cl.: E03C 1/122, E03C 1/295, E03F 5/08, F16L 55/07

(54) **RACCORD POUR CANALISATION D ÉVACUATION D EAU**

(30) Priorité: 31.07.2020 FR 2008145
(71) Demandeur: Wirquin Plastiques, 44470 Carquefou (FR)
(72) Inventeur: Le Coent, Daniel, 44470 Carquefou (FR); Bacouet, Alban, 44980 Sainte Luce sur Loire (FR)
(74) Mandataire: Lequien, Philippe

(57) **Abrégé**

L'invention concerne un raccord (1) pour canalisation d'évacuation d'eau d'un équipement sanitaire, le raccord (1) comprenant une tubulure (101) présentant :
- une ouverture d'entrée d'eau (102) ;
- une ouverture de sortie d'eau (103), opposée à l'ouverture d'entrée d'eau (102) ;
- un orifice de prise d'air (104) intercalé entre l'ouverture d'entrée d'eau (102) et l'ouverture de sortie d'eau (103),
le raccord (1) comprenant également un bouchon (2) à clapet obturant l'orifice de prise d'air (104),
le raccord (1) intégrant un organe de chemisage monté dans la tubulure (101), et comprenant une paroi déflectrice s'étendant depuis une première extrémité située entre l'ouverture d'entrée d'eau (102) et l'orifice de prise d'air (104), l'organe de chemisage divisant la tubulure (101) en une première partie d'écoulement d'eau et une deuxième partie d'admission d'air dans le raccord (1), l'orifice de prise d'air (104) débouchant dans la deuxième partie d'admission d'air.

## Description

Le domaine de l'invention est celui de la conception et de la fabrication d'équipements d'évacuation.

Plus précisément, l'invention concerne un système d'évacuation d'eau à prise d'air.

Dans le domaine des équipements sanitaires, les conduites permettent d'évacuer les eaux souillées depuis un module sanitaire, tel qu'un WC ou un lavabo, vers un réseau commun de canalisations, en vue de leur traitement postérieur.

Pour cela, les conduites sont continues depuis le module sanitaire jusqu'au réseau commun de canalisations.

Toutefois, pour améliorer l'évacuation des eaux souillées, et notamment éviter leur bouchage et leur désiphonage et, le cas échéant, les remontées d'odeurs, les conduites sont équipées de prises d'air.

Ainsi, de l'air est inséré dans le flux d'eau souillée, ce qui empêche notamment de créer une dépression, ou à l'inverse une surpression, dans les conduites, qui engendre alors un mauvais écoulement de l'eau souillée.

De telles prises d'air comprennent généralement une soupape mobile permettant d'obturer un orifice d'entrée d'air dans la conduite ou de laisser libre ledit orifice.

Plus précisément, la soupape est mobile entre une position d'entrée dans laquelle elle est écartée de l'orifice et permet l'entrée d'air dans la conduite, et une position d'obturation dans laquelle elle obture l'orifice et empêche l'entrée d'air à l'intérieur de la conduite.

Toutefois, il est possible que la soupape adopte sa position d'entrée ou sa position d'obturation de manière erronée ce qui peut provoquer une fuite ou empêcher une bonne évacuation de l'eau souillée.

En effet, dans le cas où la soupape adopte sa position d'entrée dans une phase d'évacuation, l'eau souillée peut alors fuir par l'orifice.

En revanche, lorsque la soupape reste bloquée dans sa position d'obturation, elle empêche l'air de pénétrer dans la conduite, et donc une bonne évacuation de l'eau souillée.

Ce phénomène peut notamment être dû au fait que des matières présentes dans les eaux souillées se déposent aux abords de la soupape et nuisent à son bon fonctionnement.

Aussi, il est nécessaire, pour assurer une bonne évacuation de l'eau souillée, que la soupape adopte sa position d'entrée, sans pour autant que l'eau souillée ne puisse fuir par l'orifice et/ou ne vienne encrasser la soupape.

Pour cela, des dispositifs de clapets mobiles ont été développés. Ces clapets permettent d'assurer une entrée d'air lorsqu'elle est nécessaire et une obturation lorsque aucun air n'est nécessaire.

Plus particulièrement, les clapets sont montés et orientés dans les conduites de manière à ce que le clapet, lors de son mouvement, assure une entrée d'air et forme une barrière à un flux d'eau souillée qui est évacuée.

Toutefois, ces clapets ne sont pas sans inconvénients.

En effet, certains clapets peuvent comprendre des pièces présentant un mouvement relatif entre elles. Dès lors, ces pièces peuvent se gripper et leur mouvement relatif devenir inefficaces, au risque de provoquer une fuite par manque d'obturation totale de l'orifice lorsque cela est nécessaire.

D'autres clapets peuvent comprendre une membrane souple mobile qui forme un obturateur. Une telle membrane peut alors sécher et se durcir dans le temps et perdre de son élasticité qui lui permet d'obturer convenablement l'orifice de prise d'air.

Cela peut alors une mauvaise étanchéité du clapet lors d'une évacuation d'eau souillée, et donc provoquer une fuite d'eau souillée.

L'invention a notamment pour objectif de palier les inconvénients de l'art antérieur.

Plus précisément, l'invention a pour objectif de proposer une solution permettant de réaliser une entrée d'air lors de l'évacuation d'eau souillée sans risque de fuite d'eau souillée et/ou d'encrassement de la soupape, cela de manière fiable.

L'invention a également pour objectif de fournir une telle solution qui soit simple d'installation.

L'invention a en outre pour objectif de fournir une telle solution qui puisse être intégrée à un équipement sanitaire existant.

Ces objectifs, ainsi que d'autres qui apparaîtront par la suite, sont atteints grâce à l'invention qui a pour objet un raccord pour canalisation d'évacuation d'eau d'un équipement sanitaire, le raccord comprenant une tubulure présentant :
- une ouverture d'entrée d'eau ;
- une ouverture de sortie d'eau ;
- un orifice de prise d'air intercalé entre l'ouverture d'entrée d'eau et l'ouverture de sortie d'eau,
le raccord comprenant également un bouchon à clapet obturant l'orifice de prise d'air,
dans lequel le raccord intègre un organe de chemisage monté dans la tubulure, et comprenant une paroi déflectrice s'étendant depuis une première extrémité située entre l'ouverture d'entrée d'eau et l'orifice de prise d'air, l'organe de chemisage divisant la tubulure en une première partie d'écoulement d'eau et une deuxième partie d'admission d'air dans le raccord, l'orifice de prise d'air débouchant dans la deuxième partie d'admission d'air,
caractérisé en ce que le raccord comprend également un jambage permettant de maintenir écartée une extrémité libre de la paroi déflectrice de la tubulure. L'organe de chemisage permet de laisser entrer un flux d'air dans la tubulure, cela afin de permettre de faciliter l'évacuation d'eau depuis un équipement sanitaire et d'éviter tout risque de désiphonage.

En outre, l'organe de chemisage permet de protéger l'orifice de prise d'air de saletés contenues dans l'eau évacuée.

En effet, de telles saletés peuvent obstruer l'orifice de prise d'air et empêcher sa bonne efficacité, c'est-à-dire l'introduction d'un flux d'air dans la tubulure.

La présence du jambage assure l'intégration du flux d'air dans la tubulure lorsque l'eau est évacuée.

En effet, lors de son évacuation, l'eau exerce une force sur la paroi déflectrice, qui tend à la rapprocher de la paroi de la tubulure, et donc à limiter le passage d'air entre la tubulure et la paroi déflectrice.

La présence du jambage permet de maintenir écartée la paroi déflectrice de la tubulure et donc l'intégration d'un flux d'air dans le flux d'eau en toutes circonstances, ou quasiment.

Avantageusement, l'organe de chemisage comprend une portion de fixation depuis laquelle s'étend la paroi déflectrice.

Cela permet alors à un utilisateur ou à un installateur, lorsqu'il monte l'organe de chemisage dans la tubulure, de vérifier que celui-ci assure bien une division de la tubulure en une première partie d'écoulement d'eau et une deuxième partie d'admission d'air dans le raccord.

En effet, la portion de fixation étant visible pour l'utilisateur ou installateur pour effectuer le montage, il est aisé de vérifier la bonne division de la tubulure par l'organe de chemisage, et notamment que l'orifice de prise d'air sera bien protégé du flux d'eau en cours d'utilisation de l'équipement sanitaire. Préférentiellement, la portion de fixation se présente sous la forme d'un cerclage destiné à prendre place dans l'orifice de prise d'air.

Un tel cerclage favorise le bon maintien de l'organe de chemisage dans la tubulure puisque cette dernière, généralement de profil annulaire, permet une coopération de forme avec ledit cerclage.

Selon un aspect avantageux, l'organe de chemisage est configuré pour que la paroi déflectrice soit affleurante avec la tubulure.

Cela permet de favoriser le bon écoulement du flux d'eau dans la tubulure, et donc la canalisation, et d'éviter qu'une partie du flux d'eau, généralement de l'eau souillée, ne puisse atteindre l'orifice de prise d'air et gêner le bon fonctionnement de celle-ci.

Avantageusement, la paroi déflectrice présente une concavité tournée vers l'intérieur de la tubulure.

Une telle concavité permet de favoriser l'écoulement du flux d'eau. En effet, cette concavité permet d'accompagner le flux d'eau sans changer sa direction de manière brutale. Ainsi, il n'y a pas de risques de pertes de charge ou de difficulté d'écoulement d'eau dans la tubulure.

Dans ce cas, la concavité de la paroi déflectrice est avantageusement formée par au moins deux rayons de courbure perpendiculaires l'un par rapport à l'autre

Cela procure à la concavité une forme sensiblement de dôme qui favorise l'écoulement de l'eau.

Préférentiellement, le jambage se présente sous une forme annulaire présentant au moins une partie complémentaire de forme à la tubulure.

Une telle forme annulaire, avantageusement complémentaire de forme à la forme de la tubulure, permet de maintenir écartée la paroi déflectrice de la tubulure en tous points de celle-ci ou quasiment.

Par ailleurs, cela permet d'éviter une déformation de l'organe de chemisage par la force exercée par l'eau évacuée, une telle déformation pouvant, dans le pire des cas, conduire à une rupture de l'organe de chemisage.

Avantageusement, l'un au moins du jambage et de la portion de fixation présente un épaulement permettant une retenue de l'organe de chemisage dans la tubulure.

Cet épaulement, en coopérant avec la tubulure, permet une mise en place et un retrait faciles de l'organe de chemisage dans la tubulure, sans nécessiter un recours à des outils ou à des manipulation complexes et fastidieuses. L'invention concerne également un organe de chemisage pour raccord tel que décrit précédemment, caractérisé en ce qu'il comprend :
- une portion de fixation à une tubulure du raccord ;
- une paroi déflectrice s'étendant depuis la portion de fixation jusqu'à une extrémité libre, pour dévier un flux d'eau circulant dans la tubulure caractérisé en ce que l'organe de chemisage comprend également un jambage d'écartement de l'extrémité libre de la paroi déflectrice de la tubulure dans laquelle l'organe de chemisage est monté.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une vue en perspective d'un raccord selon l'invention, selon un premier mode de réalisation ;
- la figure 2 est une vue en coupe longitudinale du raccord selon l'invention, selon le premier mode de réalisation, le raccord comprenant un organe de chemisage selon une première forme de réalisation ;
- la figure 3 est une vue en perspective de dessous de l'organe de chemisage selon la première forme de réalisation ;
- la figure 4 est une vue en perspective latérale de l'organe de chemisage selon la première forme de réalisation ;
- la figure 5 est une vue en perspective de dessus de l'organe de chemisage selon la première forme de réalisation ;
- la figure 6 est une vue en perspective d'un raccord selon l'invention, selon un deuxième mode de réalisation ;
- la figure 7 est une vue en coupe longitudinale du raccord selon l'invention, selon le deuxième mode de réalisation, le raccord comprenant un organe de chemisage selon une deuxième forme de réalisation ;
- la figure 8 est une vue en perspective de dessous de l'organe de chemisage selon la deuxième forme de réalisation ;
- la figure 9 est une vue en perspective de dessous, selon un angle de vue différent, de l'organe de chemisage selon la deuxième forme de réalisation ;
- la figure 10 est une vue en perspective de dessus de l'organe de chemisage selon la deuxième forme de réalisation ;
- la figure 11 est une vue en coupe selon le plan de coupe XI-XI de la figure 7,

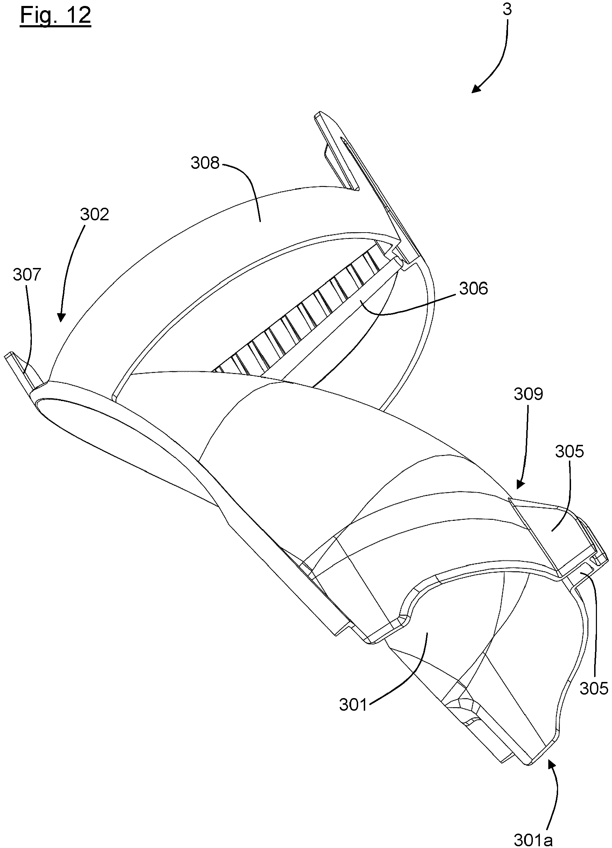

- la figure 12 est une vue en perspective de dessous d'une variante de l'organe de chemisage selon la deuxième forme de réalisation.

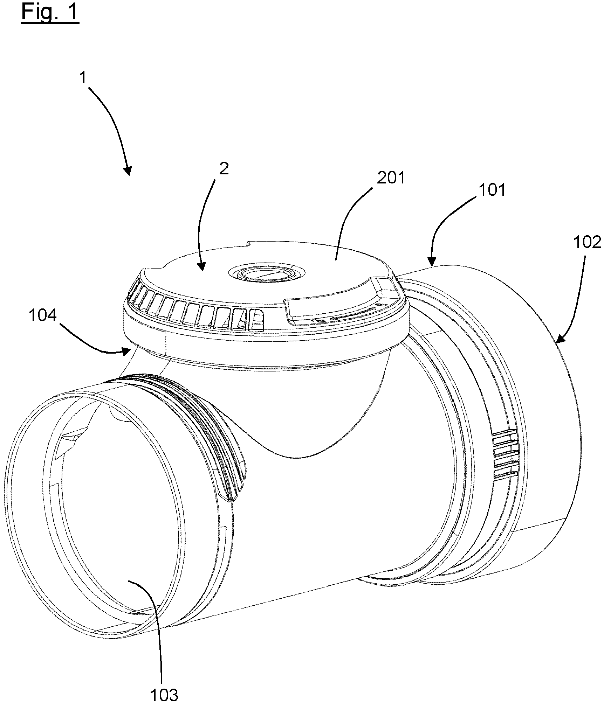

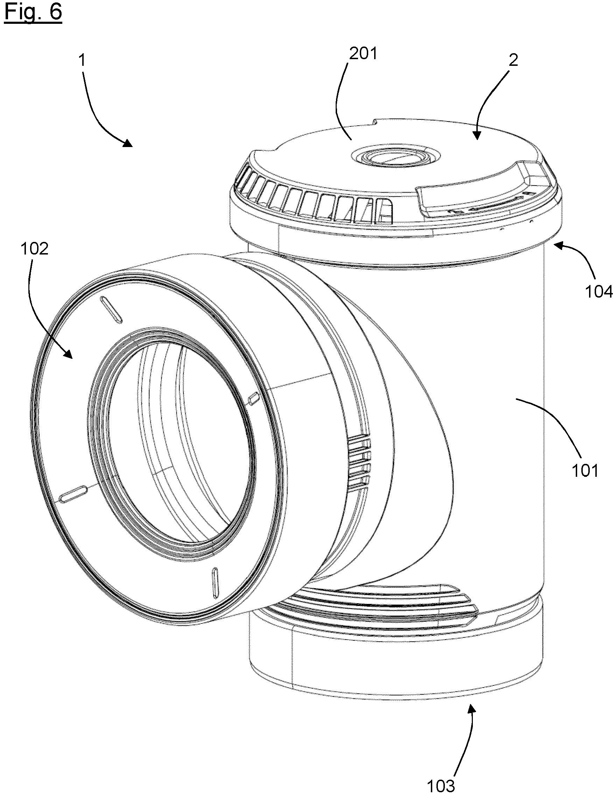

Les figures 1 et 6 illustrent respectivement un premier mode et un deuxième mode de réalisation d'un raccord 1 selon l'invention.

Un tel raccord comprend une tubulure 101 présentant :
- une ouverture d'entrée d'eau 102 ;
- une ouverture de sortie d'eau 103, opposée à l'ouverture d'entrée d'eau 102 ;
- un orifice de prise d'air 104 intercalé entre l'ouverture d'entrée d'eau 102 et l'ouverture de sortie d'eau 103.

Le raccord 1 comprend également un bouchon 2 à clapet positionné sur la tubulure 101, de sorte à obturer l'orifice de prise d'air 104.

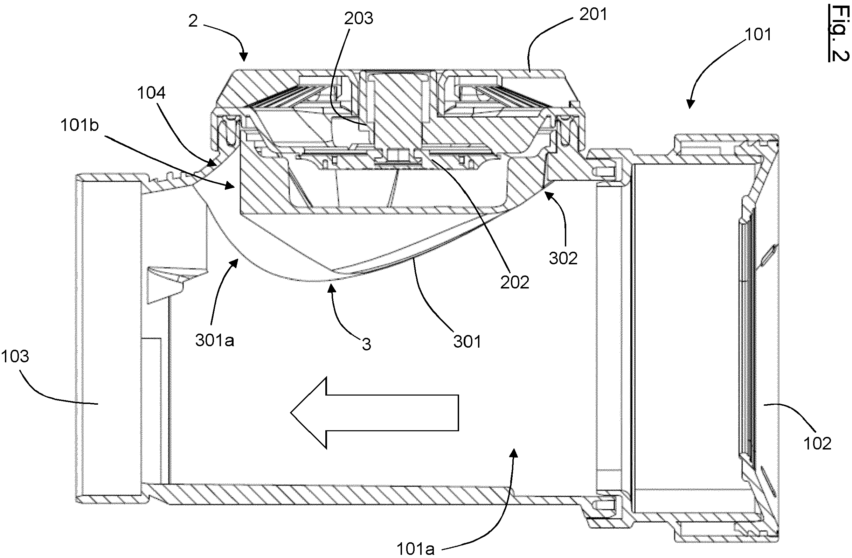

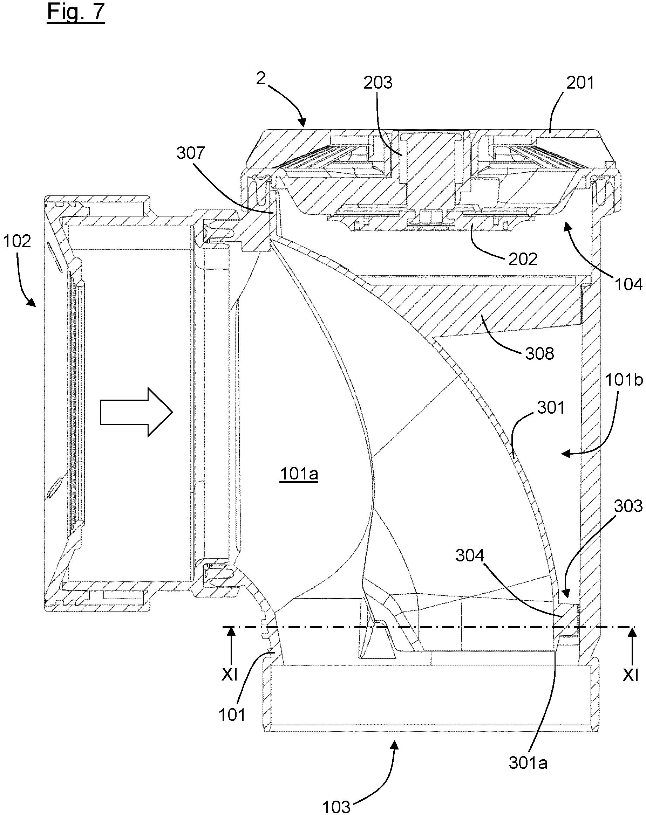

Tel qu'illustré sur les vues en coupe longitudinales des figures 2 et 7, le bouchon 2 à clapet comprend une coque 201 formant bouchon hermétique de l'orifice de prise d'air 104, et une soupape 202 montée mobile sur la coque 201 et pouvant adopter une première position d'entrée d'air et une deuxième position d'obturation.

Plus particulièrement, dans sa position d'obturation, la soupape 202 se trouve au contact de la coque 201, de sorte à empêcher le passage d'un fluide de part et d'autre du bouchon 2, et notamment de la coque 201.

En revanche, dans sa position d'entrée d'air, la soupape 202 se trouve écartée de la coque 201 pour permettre à un fluide, notamment de l'air, de traverser le bouchon 2 à clapet, et plus précisément la coque 201, et permettre à un air extérieur au raccord 1 de pénétrer dans celui-ci.

Des moyens de rappel 203 en position d'obturation du clapet sont notamment intégrés dans le bouchon 2 à clapet, de sorte qu'en l'absence d'une dépression à l'intérieur de la tubulure 101, la soupape 202 conserve sa position d'obturation et empêche fluide de pouvoir rentrer dans ou sortir hors de la tubulure 101 par le bouchon 2 à clapet.

En revanche, en cas de dépression à l'intérieur de la tubulure 101, la soupape 202 adopte sa position de passage d'air pour permettre à un air extérieur de pénétrer à l'intérieur de la tubulure 101, évitant ainsi un désiphonage et permettant alors un bon écoulement d'eau dans la tubulure 101.

Tel qu'illustré sur les figures 1, 2, 6 et 7, l'orifice de prise d'air 104 étant intercalé entre l'ouverture d'entrée d'eau 102 et l'ouverture de sortie d'eau 103, il est nécessaire de le protéger des eaux souillées circulant dans la tubulure 101, notamment pour éviter que le bouchon 2 à clapet ne soit recouvert de saletés contenues par les eaux évacuées, ces saletés pouvant alors nuire au bon fonctionnement de la soupape 202.

Pour cela, le raccord 1 selon l'invention intègre un organe de chemisage 3. Cet organe de chemisage 3 est monté dans la tubulure 101, et comprend une paroi déflectrice 301.

La paroi déflectrice 301 s'étend depuis une première extrémité 302 située entre l'ouverture d'entrée d'eau 102 et l'orifice de prise d'air 104.

La paroi déflectrice 301 permet de diviser la tubulure 101 en une première partie 101 a et une deuxième partie 101b.

Plus précisément, la première partie 101a est une partie d'écoulement d'eau à l'intérieur de laquelle les eaux évacuées sont destinées à s'écouler, et la deuxième partie est une partie d'admission d'air dans le raccord 1, permettant à un air provenant de l'orifice de prise d'air 104 de circuler dans la tubulure 101. Ainsi, tel qu'illustré sur les vues en coupe longitudinale des figures 2 et 7, l'orifice de prise d'air 104 débouche dans la deuxième partie 101b de la tubulure 101, c'est-à-dire dans la partie d'admission d'air.

Cela permet notamment d'éviter tout désiphonage en cas dépression dans la tubulure 101.

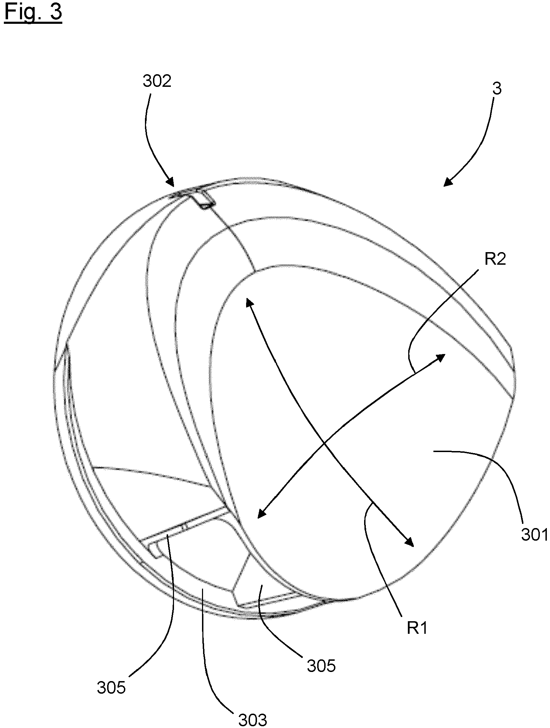

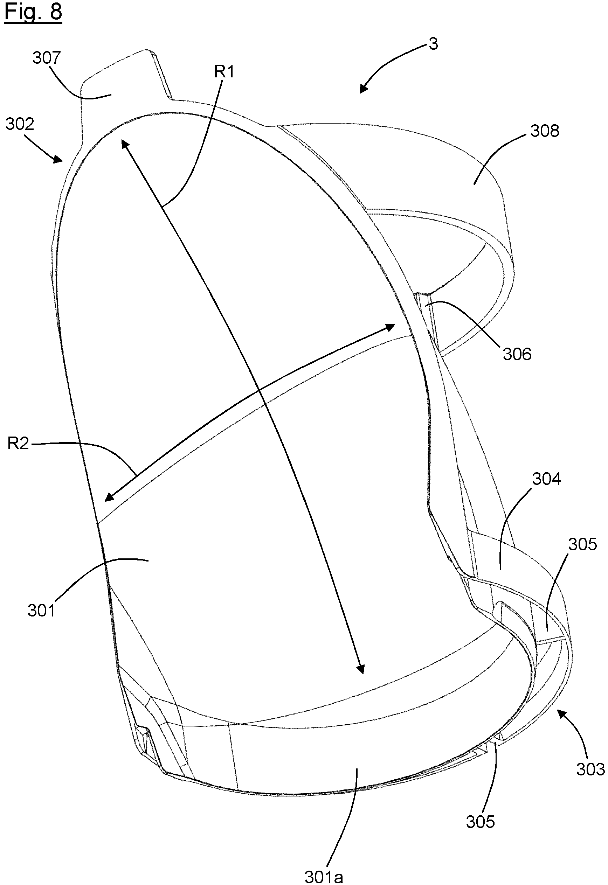

L'organe de chemisage 3 comprend également une portion de fixation 303. La paroi déflectrice présente, tel qu'illustré notamment sur les figures 3 et 8, une concavité destinée à être orientée vers l'intérieur de la tubulure 101.

Plus particulièrement, tel que cela est visible sur la figure 2 ainsi que sur la figure 7, la concavité de la paroi déflectrice 301 de l'organe de chemisage 3 est tournée vers l'intérieur de la tubulure 101 et notamment vers l'ouverture d'entrée d'eau 102 pour permettre de guider l'eau évacuée depuis l'ouverture d'entrée d'eau 102 vers l'ouverture de sortie d'eau 103.

En d'autres termes, la paroi déflectrice 301 permet d'éviter que l'eau évacuée, qui provient de l'ouverture d'entrée d'eau 102, ne puisse atteindre l'orifice de prise d'air 104.

La concavité de la paroi déflectrice 301 est formée par au moins deux rayons de courbure R1, R2 perpendiculaires l'un à l'autre.

Ces deux rayons de courbure R1, R2 confèrent à la paroi déflectrice une forme bombée qui prolonge de manière artificielle la forme tubulaire de la tubulure 101.

Un premier rayon de courbure R1 s'étend depuis la première extrémité 302 de l'organe de chemisage 3 en direction d'une extrémité libre. Un deuxième rayon de courbure R2 s'étend, quant à lui, perpendiculairement au premier rayon de courbure R1.

Cette forme bombée permet, outre de faciliter l'écoulement d'eau, d'éviter, ou au moins de minimiser, les pertes de charges et les turbulences dans l'écoulement d'eau à l'intérieur de la tubulure 101.

Tel qu'illustré sur la figure 7, l'organe de chemisage est configuré pour que, en section transversale, la partie deuxième partie 101b de la tubulure 101, c'est-à-dire l'admission d'air dans le raccord 1, permette d'atténuer efficacement l'anti-siphonage.

En d'autres termes, la majeure partie de l'espace de circulation à l'intérieur de la tubulure 101 est réservée à l'écoulement d'eau pour permettre sa bonne évacuation.

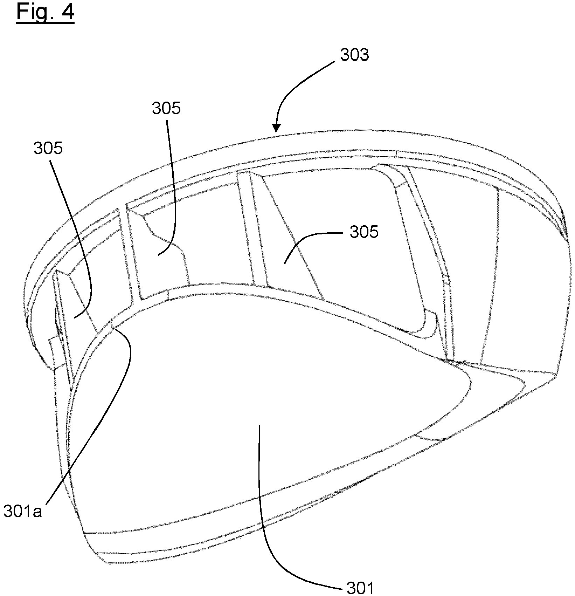

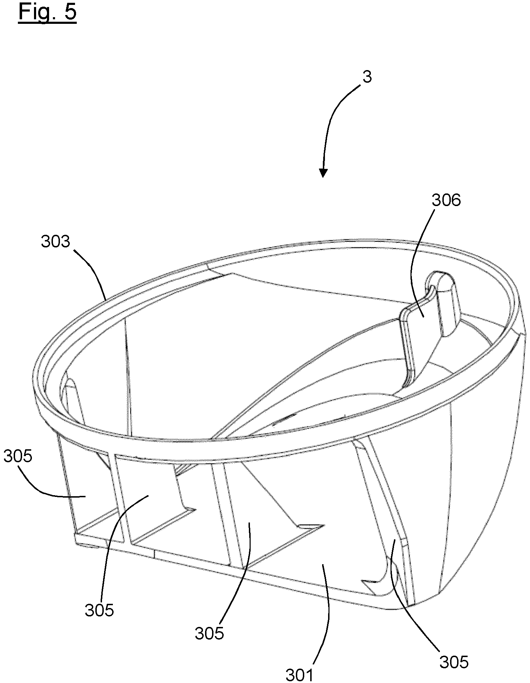

Selon un premier mode de réalisation illustré sur les figures 1, 2, 3, 4 et 5, l'ouverture d'entrée d'eau 102 et l'ouverture de sortie d'eau 103 sont positionnées en regard l'une de l'autre et l'orifice de prise d'air 104 débouche sur un axe passant par l'ouverture d'entrée d'eau 102 et l'ouverture de sortie d'eau 103, et plus précisément perpendiculairement à cet axe.

Dans ce premier mode de réalisation, un organe de chemisage 3 selon une première forme de réalisation est utilisé.

Plus précisément, selon cette première forme de réalisation, l'organe de chemisage 3 se présente sous une forme sensiblement de palet.

Autrement dit, la portion de fixation 303 depuis laquelle s'étend la paroi déflectrice 301 se présente sous la forme d'un cerclage qui prend place à l'intérieur de l'orifice d'entrée d'air 104.

Plus précisément, tel que cela est illustré sur la figure 2, l'organe de chemisage 3, est configuré pour que la paroi déflectrice 301 soit affleurante avec la tubulure 101.

En d'autres termes, la paroi déflectrice 301, au niveau de la première extrémité 302 de l'organe de chemisage 3, affleure avec l'intérieur de la tubulure 101, de sorte à former une continuité, ou quasiment, de ladite tubulure 101 à l'aplomb de l'orifice de prise d'air 104.

La paroi déflectrice 301 présente une extrémité libre 301a, opposée à la première extrémité 302 qui est maintenue écartée de la tubulure 101 comme expliqué ci-après.

En s'éloignant de la première extrémité 302, la paroi déflectrice 301 s'écarte ainsi de la portion de fixation 303, mais reste reliée à celle-ci par l'intermédiaire d'un jambage 304.

Selon cette première forme de réalisation, le jambage 304 comprend au moins une ailette 305, et de préférence une pluralité d'ailettes 305.

Chaque ailette 305 s'étend depuis la paroi déflectrice 301 jusqu'à la portion de fixation 303.

Ces ailettes 305 ménagent entre elles des espaces permettant un passage fluidique.

Plus précisément, le passage fluidique entre les ailettes 305 permet à un air provenant de l'orifice d'entrée d'air 104 de circuler contre la paroi déflectrice 301 pour être intégré à l'intérieur de la tubulure 101 et ainsi éviter un désiphonage lors de l'évacuation d'eau.

Le jambage 304, et plus précisément les ailettes 305, permet ainsi de maintenir l'extrémité libre 301a de la paroi déflectrice 301 écartée de la tubulure 101.

En référence à la figure 7, la portion de fixation 303 forme, au moins sur une partie de sa périphérie, un crochet destiné à venir s'engager dans un épaulement 105 de l'orifice d'entrée d'air 104, cela afin de favoriser le maintien en position de l'organe de chemisage 3 à l'intérieur de la tubulure 101.

Ainsi, l'insertion et/ou le retrait de l'organe de chemisage 3 s'en trouve facilité. Préférentiellement, l'organe de chemisage 3 comprend une saillie 306 s'étendant depuis la paroi déflectrice 301 dans une direction similaire au jambage 304.

Cette saillie 306 permet une manipulation aisée par un utilisateur de l'organe de chemisage 3, notamment pour son insertion ou son retrait dans une tubulure 101.

Selon le premier mode de réalisation illustré sur les figures 1 à 5, la tubulure 101 est utilisée de manière horizontale, c'est-à-dire que l'ouverture d'entrée d'eau 102 et l'ouverture de sortie d'eau 103 sont en vis-à-vis l'une de l'autre selon une direction horizontale, et l'orifice d'entrée d'air 104 débouche perpendiculairement dans la tubulure 101.

L'organe de chemisage 3, dans ce premier mode de réalisation, est alors compact en termes de dimensions.

Plus particulièrement, la portion de fixation 303 est située au-dessus de la paroi déflectrice 301, l'ensemble s'étendant sur une faible hauteur.

L'organe de chemisage 3 est ainsi intercalé entre le bouchon 2 à clapet et un flux d'eau circulant dans la tubulure 101.

La première extrémité 302 de l'organe de chemisage 3 est alors tournée vers l'ouverture d'entrée d'eau 102 et pénètre dans la tubulure 101 en s'étendant vers le fond de celle-ci en direction de l'ouverture de sortie d'eau 103.

Par son extension vers le fond de la tubulure 101, la paroi déflectrice 301 permet de ménager, avec la tubulure 101, un espace permettant l'admission d'air à l'intérieur de la tubulure 101 depuis l'orifice d'entrée d'air 104.

En aval de l'organe de chemisage 3, c'est-à-dire après l'organe de chemisage 3 selon un sens d'écoulement d'eau dans la tubulure 101 depuis l'ouverture d'entrée d'eau 102 vers l'ouverture de sortie d'eau 103 (tel qu'illustré sur la figure 2 par les flèches), un mélange air et eau peut ainsi être observé circulant dans la tubulure 101 en direction de l'ouverture de sortie d'eau 103.

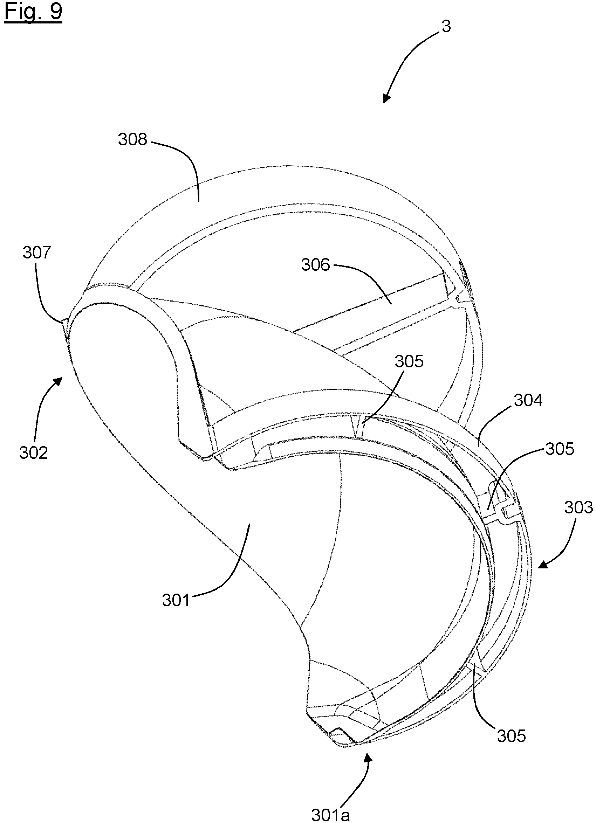

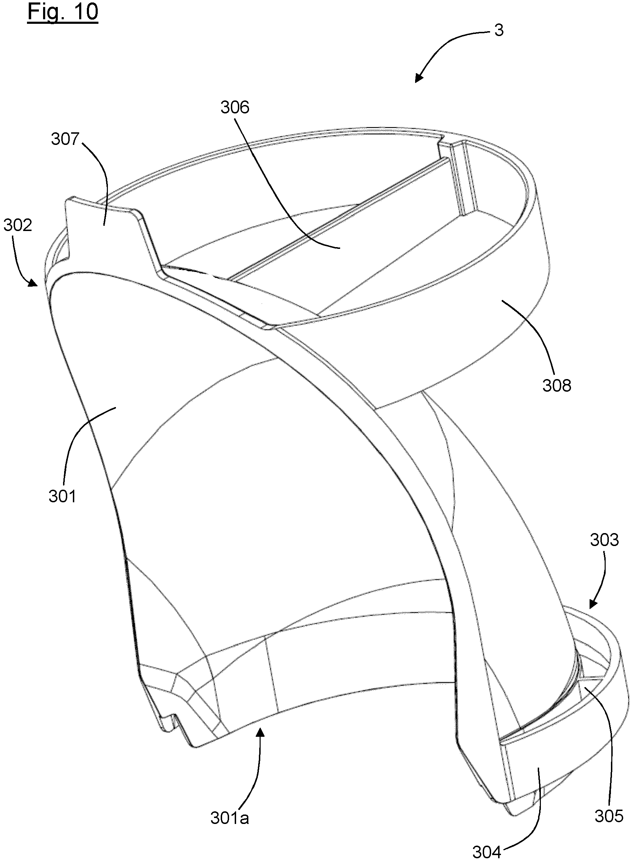

En référence aux figures 6 à 10, le deuxième mode de réalisation du raccord 1 est à présent décrit.

Dans ce deuxième mode, la tubulure 101 présente une forme en T mais pourrait également présenter une forme en Y.

En effet, l'ouverture d'entrée d'eau 102 et l'ouverture de sortie d'eau 103 ne sont pas alignées l'une avec l'autre.

En revanche, l'ouverture de sortie d'eau 103 se trouve alignée avec l'orifice d'entrée d'air 104.

Ainsi, l'eau circulant dans la tubulure 101 suit un chemin coudé depuis l'orifice d'entrée d'eau 102 pour atteindre l'orifice de sortie d'eau 103.

Dans ce second mode de réalisation, l'organe de chemisage 3 est configuré selon une deuxième forme de réalisation.

Tel qu'illustré sur la figure 7, la portion de fixation 303 de l'organe de chemisage 3 prend place dans l'épaulement 105 de l'orifice d'entrée d'air 104.

Plus particulièrement, l'organe de chemisage 3 est monté, selon un axe qui s'étend depuis l'orifice d'entrée d'air 104 vers l'ouverture de sortie d'eau 103 de manière sensiblement verticale.

Selon cette forme de réalisation, l'organe de chemisage 3 présente une casquette 307 destinée à venir en appui sur la face intérieure de l'orifice d'entrée d'air 104.

Cette casquette 307 forme ainsi une butée en rotation de l'organe de chemisage 3 dans la tubulure 101, ce qui permet de compléter le maintien de l'organe de chemisage 3 à l'intérieur de la tubulure 101.

L'organe de chemisage 3 ne forme pas de marche ou de saillie dans l'écoulement du flux d'eau à l'intérieur de la tubulure 101. En effet, une telle saillie peut générer une retenue de matière (par exemple des saletés) qui, en l'absence d'une maintenance préventive régulière, peut entraîner un bouchage ou, à tout le moins, une obstruction au moins partielle au passage de l'eau s'écoulant dans la tubulure 101, ce qui provoque alors une difficulté dans l'évacuation de l'eau.

A l'instar de la première forme de réalisation, en s'éloignant de la première extrémité 302, la paroi déflectrice 301 s'écarte en aval de la portion de fixation 303, selon le sens d'écoulement de l'eau.

Selon cette deuxième forme de réalisation, le jambage 304 comprend également au moins une ailette 305, et de préférence une pluralité d'ailettes 305.

Chaque ailette 305 s'étend depuis la paroi déflectrice 301 jusqu'à une arche 308.

Le jambage 304, grâce à son arche 308, présente une forme circulaire, lui permettant de venir au contact de la paroi interne de la tubulure 101 pour maintenir un écartement entre ladite tubulure 101 et la paroi déflectrice 301, cela afin de permettre l'insertion d'air dans l'eau s'écoulant à l'intérieur de la tubulure 101.

La présence des ailettes 305 assure que, lorsque le flux d'eau est évacué depuis l'ouverture d'entrée d'eau 102 vers l'ouverture de sortie d'eau 103, la paroi déflectrice 301 ne soit pas repoussée contre la paroi interne de la tubulure 101, ce qui assure alors le passage d'air et limite les risques de mauvais écoulement d'eau vers la canalisation.

En fonctionnement, l'eau circule alors d'un premier côté de la paroi déflectrice 301 et l'air d'un deuxième côté de la paroi déflectrice, c'est-à-dire du côté opposé à l'eau.

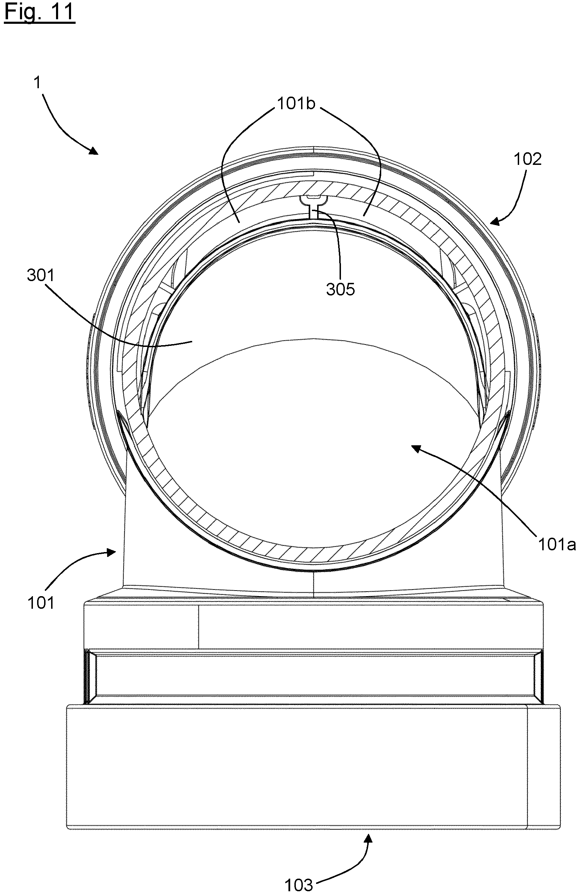

Plus précisément, l'eau circule dans la première partie 101a de la tubulure 101, et l'air circule dans la deuxième partie 101b de la tubulure 101 comme cela est notamment visible sur les figures 2, 7 et 11.

Le raccord 1, selon l'invention, qui vient d'être décrit, permet ainsi de faciliter l'évacuation des eaux usées hors des équipements sanitaires, notamment en évitant un désiphonage.

Cela favorise une insertion d'air dans l'eau évacuée, permettant à la fois d'éviter toute surpression à l'intérieur de la tubulure 101 et des canalisations, mais également d'assurer un accès de visite dans la canalisation.

En effet, par retrait de l'organe de chemisage 3 hors de l'orifice d'entrée d'air 104, il est possible d'insérer un furet, par exemple, pour nettoyer la tubulure et/ou canalisation si nécessaire.

## Revendications

1. Raccord (1) pour canalisation d'évacuation d'eau d'un équipement sanitaire, le raccord (1) comprenant une tubulure (101) présentant :
- une ouverture d'entrée d'eau (102) ;
- une ouverture de sortie d'eau (103) ;
- un orifice de prise d'air (104) intercalé entre l'ouverture d'entrée d'eau (102) et l'ouverture de sortie d'eau (103),
le raccord (1) comprenant également un bouchon (2) à clapet obturant l'orifice de prise d'air (104),
dans lequel le raccord (1) intègre un organe de chemisage (3) monté dans la tubulure (101), et comprenant une paroi déflectrice (301) s'étendant depuis une première extrémité (302) située entre l'ouverture d'entrée d'eau (102) et l'orifice de prise d'air (104), l'organe de chemisage (3) divisant la tubulure (101) en une première partie (101a) d'écoulement d'eau et une deuxième partie (101b) d'admission d'air dans le raccord (1), l'orifice de prise d'air (104) débouchant dans la deuxième partie (101b) d'admission d'air,
**caractérisé en ce que** le raccord (1) comprend également un jambage (304) permettant de maintenir écartée une extrémité libre de la paroi déflectrice (301) de la tubulure (101).

2. Raccord (1) selon la revendication 1, **caractérisé en ce que** l'organe de chemisage (3) comprend une portion de fixation (303) depuis laquelle s'étend la paroi déflectrice (301).

3. Raccord (1) selon la revendication précédente, **caractérisé en ce que** la portion de fixation (303) se présente sous la forme d'un cerclage destiné à prendre place dans l'orifice de prise d'air (104).

4. Raccord (1) selon l'une quelconque des revendications précédentes, **caractérisé en ce que** l'organe de chemisage (3) est configuré pour que la paroi déflectrice (301) soit affleurante avec la tubulure (101).

5. Raccord (1) selon l'une quelconque des revendications précédentes, **caractérisé en ce que** la paroi déflectrice (301) présente une concavité tournée vers l'intérieur de la tubulure (101).

6. Raccord (1) selon la revendication précédente, **caractérisé en ce que** la concavité de la paroi déflectrice (301) est formée par au moins deux rayons de courbure (R1, R2) perpendiculaires l'un par rapport à l'autre

7. Raccord (1) selon l'une quelconque des revendications précédentes, **caractérisé en ce que** le jambage (304) se présente sous une forme annulaire présentant au moins une partie complémentaire de forme à la tubulure (101).

8. Raccord (1) selon la revendication 2 ou la revendication 3, **caractérisé en ce que** l'un au moins du jambage (304) et de la portion de fixation (303) présente un épaulement (105) permettant une retenue de l'organe de chemisage (3) dans la tubulure (101).

9. Organe de chemisage (3) pour raccord (1) selon l'une quelconque des revendications précédentes, l'organe de chemisage (3) comprenant :
- une portion de fixation (303) à une tubulure (101) du raccord (1) ;
- une paroi déflectrice (301) s'étendant depuis la portion de fixation (303) jusqu'à une extrémité libre (301a), pour dévier un flux d'eau circulant dans la tubulure (101),
**caractérisé en ce que** l'organe de chemisage (3) comprend également un jambage (304) d'écartement de l'extrémité libre de la paroi déflectrice (301) de la tubulure (101) dans laquelle l'organe de chemisage (3) est monté.
